Europäisches Patentamt

European Patent Office

Office européen des brevets

(11) Veröffentlichungsnummer: **0 161 417**
**B1**

(12) **EUROPÄISCHE PATENTSCHRIFT**

(45) Veröffentlichungstag der Patentschrift:
**03.02.88**

(51) Int. Cl.⁴: **F 16 G  13/16**

(21) Anmeldenummer: **85103067.6**

(22) Anmeldetag: **16.03.85**

(54) **Engergieführungskette.**

(30) Priorität: **17.04.84  DE 3414412**

(43) Veröffentlichungstag der Anmeldung:
**21.11.85 Patentblatt 85/47**

(45) Bekanntmachung des Hinweises auf die Patenterteilung:
**03.02.88 Patentblatt 88/5**

(84) Benannte Vertragsstaaten:
**AT BE CH DE FR GB IT LI NL SE**

(56) Entgegenhaltungen:
**BE-A-669 924**
**FR-A-2 206 824**
**FR-A-2 393 451**
**GB-A-2 007 326**

(73) Patentinhaber: **Kabelschlepp Gesellschaft mit beschränkter Haftung, Marienborner Strasse 75, D-5900 Siegen 1 (DE)**

(72) Erfinder: **Moritz, Werner, Wetzlarer Strasse 122, D-5900 Siegen (DE)**

(74) Vertreter: **Patentanwälte Dipl.- Ing. Alex Stenger Dipl.- Ing. Wolfram Watzke Dipl.- Ing. Heinz J. Ring, Kaiser- Friedrich- Ring 70, D-4000 Düsseldorf 11 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**0 161 417**

**Beschreibung**

Gegenstand der Erfindung ist eine Energieführungskette zum Führen von Energieleitern, insbesondere Kabeln oder Schläuchen, von einem festen Anschluß zu einem ortsveränderlichen Verbraucher mit Durchgänge für die Energieleiter bildenden, teilbaren Stegen, die aus wenigstens zwei Traversen mit abgeflachtem Querschnitt und abgerundeten Schmalseiten sowie zwischen diesen im Abstand voneinandar angeordneten Trennstegen bestehen, die am oberen und unteren Ende mit Hinterschneidungen versehene, angeschnittene Ausnehmungen aufweisen, wobei die Traversen nach dem Einlegen in die Ausnehmungen durch Verdrehen um ihre Längsachse kraft- und formschlüssig mit den Trennstegen verspannbar sind.

Eine Energieführungskette der vorstehend beschriebenen Gattung ist aus der DE-A-2255 283 (FR-A-2206 824) bekannt. Diese bekannte Energieführungskette hat den Vorteil, daß ihre Stege vollständig vormontiert und in verschiedenen Größen auf Lager gehalten werden können, weil die Einzelteile kraft- und formschlüssig miteinander verbunden sind und eine stabile Gitterkonstruktion bilden. In der Praxis hat sich aber gezeigt, daß für eine erhebliche Anzahl von Aufträgen auf bestimmte Energieleiter zugeschnittene Durchgänge gewünscht werden, in denen bestimmte Energieleiter einzeln und von anderen Energieleitern getrennt geführt werden können. Die dazu notwendige Anpassung der Durchgänge an die Abmessungen der Energieleiter ist mit der bekannten Energieführungskette nicht möglich.

Aus der DE-A-1474 230 (BE-A-669 924) ist eine Energieführungskette bekannt, deren Stege aus zwei Traversen mit zwischen diesen einsetzbaren, senkrecht und bzw. oder waagerecht geteilten und auswechselbaren Brillenteilen bestehen, welche individuell auf die Abmessungen der Energieleitungen abgestimmte Durchgänge bilden. Bei dieser bekannten Energieführungskette sind die Brillenteile mehr oder weniger lose zwischen den ein U- oder C-förmiges Profil aufweisenden Traversen eingesetzt und bilden zusammen mit diesen keine stabile Gitterkonstruktion, die maschinell vormontiert und auf Lagar gehalten werden kann.

Davon ausgehend liegt der Erfindung die Aufgabe zugrunde, eine einfach konstruierte Energieführungskette mit teilbaren Stegen zu schaffen, die wahlweise mit im Abstand voneinander angeordneten Trennstegen oder mit individuellen Durchgängen versehenen Rahmenstegen oder einer Kombination aus Trennstegen und Rahmenstegen für sich allein genommen maschinell vormontiert werden können und in sich stabile Gitterkonstruktionen bilden, die für die spätere Montage mit den Laschen von Gelenkketten auf Lager gehalten werden können.

Als technische Lösung wird dafür eine Energieführungskette der eingangs beschriebenen Gattung vorgeschlagen, bei der die Traversen an der nach innen gerichteten Breitseite einen im Querschnitt C-förmigen und nach der Innenseite hin offenen Befestigungskanal zum Einsetzen eines ungeteilten Rahmensteges mit I-förmigem oder eines geteilten Rahmensteges mit T-förmigem Querschnitt und in der Mittelachse ihrer Befestigungskanäle eine Rippe aufweisen.

Bei einer praktischen Ausführungsform können die Traversen an ihren Schmalseiten mit einer Rille und den Trennstegen an einem Schenkel ihrer Ausnehmung mit einem entsprechenden Vorsprung ausgebildet sein, um die kraft- und formschlüssige Verbindung zwischen den Traversen und den Trennstegen zu verbessern. Zur Erleichterung der Montage hat es sich als zweckmäßig erwiesen, die Elastizität des mit dem Vorsprung versehenen Schenkels durch eine weiter innenliegende Einbuchtung zu vergrößern.

In weiterer Ausgestaltung der Erfindung können die Trennstege im Bereich des Bodens ihrer Ausnehmungen mit Ausschnitten für die Aufnahme von in die Befestigungskanäle der Traversen einführbaren Auflageprofilen mit T- oder I-förmigem Querschnitt versehen sein. Um die Verbindung zwischen den Traversen und den Rahmenstegen oder Auflageprofilen zu verbessern, wird vorgeschlagen, daß die Rippen in entsprechende Nuten an den Rahmenstegen oder Auflageprofilen eingreifen.

Eine nach dieser technischen Lehre ausgebildete Energieführungskette hat den Vorteil einer individuellen Anpassung der Durchgänge an die Abmessungen einzelner Energieleiter, wenn dies im Anwendungsfall von dem Kunden gewünscht oder notwendig ist, ohne daß dadurch der Vorteil einer in sich stabilen und maschinell vormontierbaren Gitterkonstruktion verlorengeht. Die Anpassung der Durchgänge an die Abmessungen der Energieleiter kann einerseits durch die Auswahl und Bemessung der Rahmenstege und/oder gleichzeitig auch durch eine Kombination aus Rahmenstegen und Trennstegen erfolgen. Auf diese Weise wird unter Beibehaltung der Vorteile der bekannten Energieführungsketten einerseits die individuelle Anpassbarkeit der Konstruktion und andererseits gleichzeitig auch die Wirtschaftlichkeit der Lagerhaltung optimiert.

Weitere Einzelheiten und Vorteile des Gegenstandes der Erfindung ergeben sich aus der nachfolgenden Beschreibung der zugehörigen Zeichnungen, in denen bevorzugte Ausführungsformen einer erfindungsgemäß ausgebildeten Energieführungskette in Ansichten und Schnitten dargestellt worden ist. In den Zeichnungen zeigen:

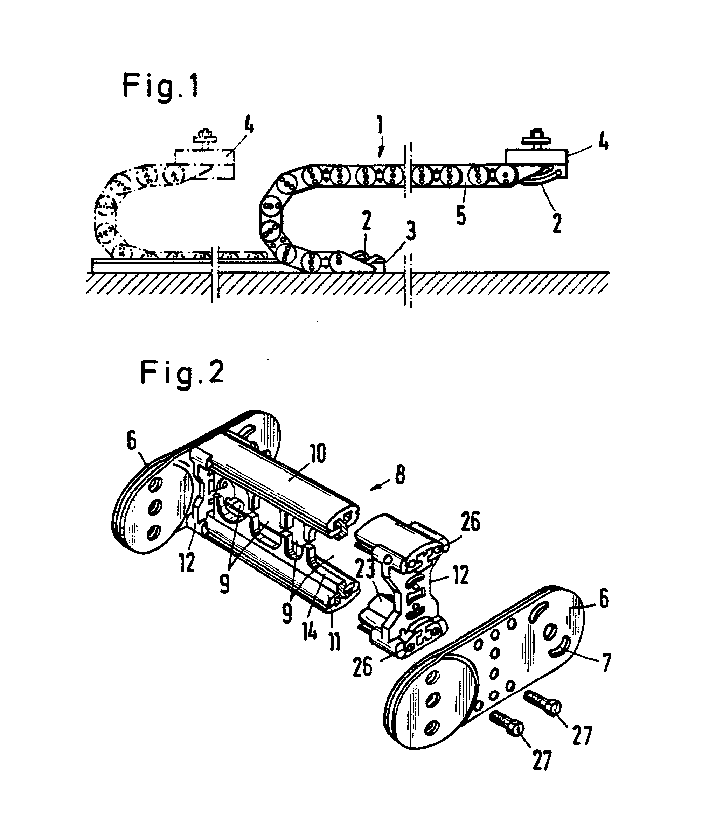

Fig. 1 das Schema einer zwischen einem festen Anschluß und einem beweglichen Verbraucher angeordneten Energieführungskette in Seitenansicht;

Fig. 2 ein Kettenglied, teilweise als Sprengbild in perspektivischer Darstellung;

Fig. 3 eine in einen Trennsteg eingespannte Traverse im Querschnitt;

Fig. 4 eine Traverse mit einem eingesetzten Rahmensteg im Querschnitt;

Fig. 5 einen Steg mit eingesetzten, geteilten Rahmenstegen in Ansicht;

Fig. 6 einen Steg mit eingesetzten Trennstegen in Ansicht;

Fig. 7 einen Steg mit einer Kombination aus einem ungeteilten Rahmensteg und Trennstegen in Ansicht.

2

Eine Energieführungskette 1 hat die Aufgabe, Energieleiter 2, in der Regel Kabel oder Schläuche, von einem festen Anschluß 3 zu einem ortsveränderlichen Verbraucher 4 zugentlastet und knickfrei zu führen. Gebildet wird die Energieführungskette 1 von zwei im Abstand voneinander angeordneten Gelenkketten 5 mit Laschen 6, deren gegenseitiger Schwenkwinkel in einer Richtung durch Anschläge 7 begrenzt ist und die durch im Abstand voneinander angeordnete Stege 8 miteinander verbunden sind. Die Stege 8 bilden miteinander fluchtende Durchgänge 9, in denen die Energieleiter 2 verlegt sind.

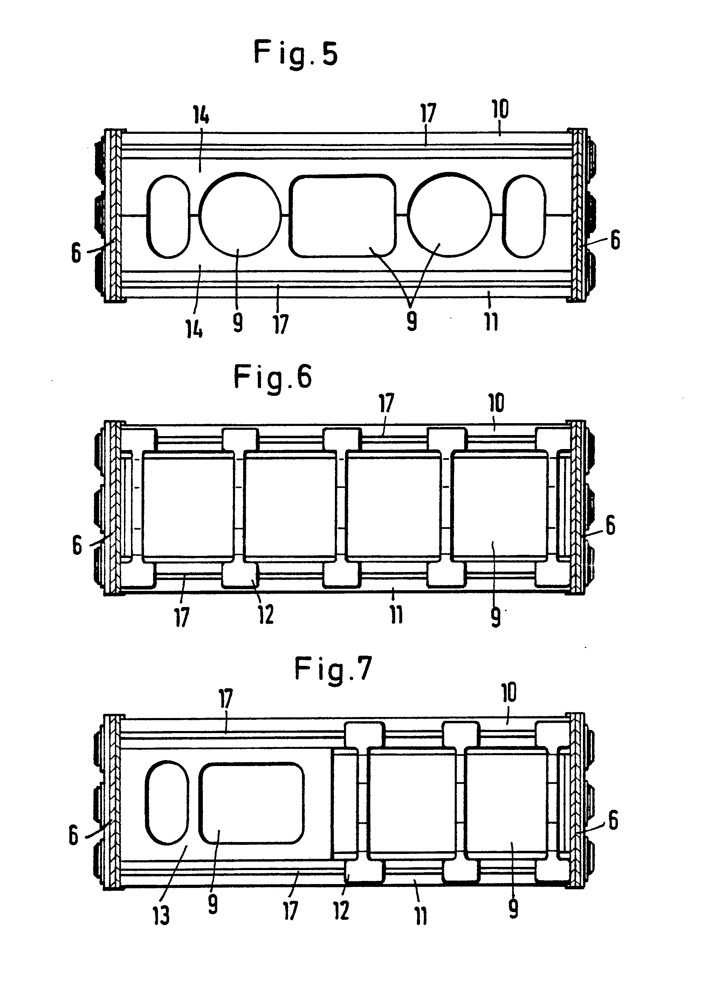

Jeder Steg 8 besteht aus einer oberen Traverse 10 und einer unteren Traverse 11 mit mehreren, zwischen diesen angeordneten Trennstegen 12 oder ungeteilten Rahmenstegen 13 oder geteilten Rahmenstegen 14 oder einer Kombination aus Trennstegen und Rahmenstegen, wie es in den Fig. 5 bis 7 dargestellt worden ist.

Die Traversen 10, 11 haben ein leistenförmiges Profil mit abgerundeten Schmalseiten 15 und flachen Breitseiten 16. An jeder Schmalseite 15 ist eine Rille 17 vorgesehen. An der nach innen zeigenden Breitseite 16 der Traversen 10, 11 ist ein im Querschnitt C-förmiger Befestigungskanal 18 vorgesehen, der in seiner Längsmitte eine Rippe 19 aufweist.

In den Trennstegen 12 sind am oberen und unteren Ende hinterschnittene Ausnehmungen 20 angeordnet, von denen eine einen Vorsprung 21 besitzt, der dazu bestimmt ist, in eine Rille 17 der Traversen 10, 11 einzugreifen. Unterhalb des mit dem Vorsprung 21 versehenen Schenkels der Ausnehmung 20 ist im Trennsteg 12 eine Einbuchtung 22 vorgesehen, um die Elastizität dieses Schenkels zu verbessern.

Im Bereich der Trennstege 12 sind Auflageprofile 23 in den Befestigungskanälen 18 der Traversen 10, 11 angeordnet, welche aus Kunststoff bestehen können und schonende Auflagen für die Energieleiter 2 bilden. Im Bereich des außenliegenden Teils der Auflageprofile 23 sind in den Trennstegen 12 Ausschnitte 24 vorgesehen.

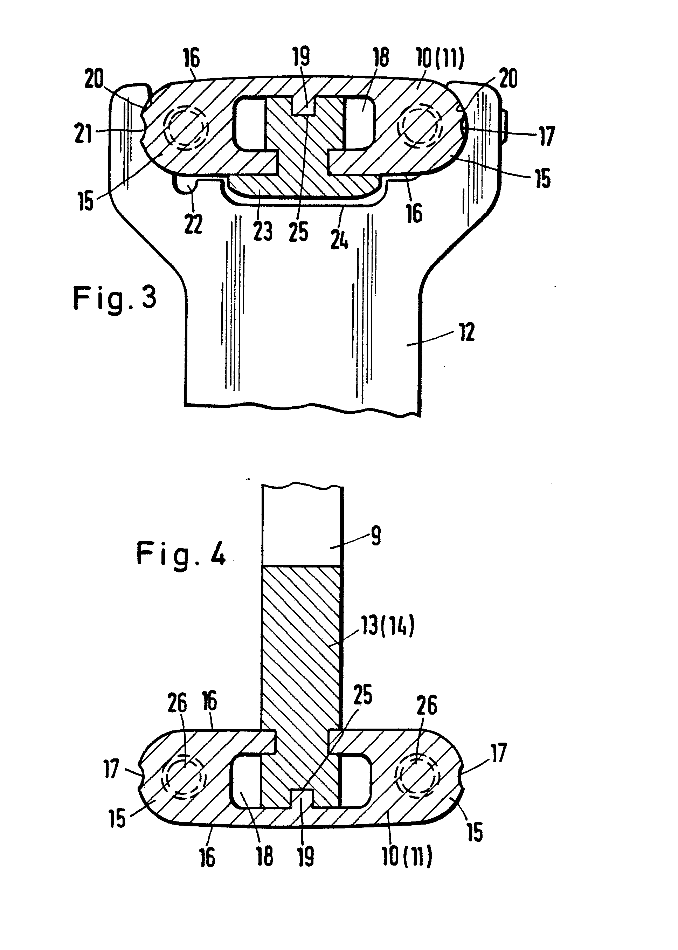

Bei dem in der Fig. 4 dargestellten Beispiel ist in dem Befestigungskanal 18 der Traversen 10, 11 ein ungeteilter Rahmensteg 13 oder auch geteilter Rahmensteg 14 befestigt. Die Rahmenstege 13, 14 und auch das Auflageprofil 23 sind mit Nuten 25 versehen, mit denen sie auf den Rippen 19 reiten, um die Stabilität der Verbindung zu verbessern. Die Vormontage der Traversen 10, 11 mit den Trennstegen 12 erfolgt in der Weise, daß die Trennstege 12 im Winkel zu den Traversen 10, 11 mit der Ausnehmung 20 ohne Vorsprung 21 auf eine Schmalseite 15 der Traversen 10, 11 aufgesetzt und dann mit der anderen Ausnehmung 20 auf die gegenüberliegende Schmalseite 15 der Traverse 10, 11 aufgeschnappt werden. Wenn die Trennstege 12 auf einer der beiden Traversen 10, 11 befestigt sind, wird die gegenüberliegende Traverse in die miteinander fluchtenden Ausnehmungen eingelegt und dann um ihre Längsachse gedreht, bis sie vollständig eingeschnappt ist.

Die Rahmenstege 13, 14 und Auflageprofile 23 werden bei der Vormontage lediglich von der Stirnseite her in die Befestigungskanäle 18 der Traversen 10, 11 mit geringer Vorspannung eingeschoben.

Für die Verbindung mit den Laschen 6 der Gelenkketten 5 sind in den Stirnseiten der Traversen 10, 11 Gewindebohrungen 26 vorgesehen, in welchen die Laschen 6 durchgreifende Schrauben 27 befestigt werden.

**Bezugszeichenliste**
**Bezugszeichenliste > t**

| | |
|---|---|
| 1 | Energieführungskette |
| 2 | Energieleiter |
| 3 | Anschluß |
| 4 | Verbraucher |
| 5 | Gelenkkette |
| 6 | Lasche |
| 7 | Anschlag |
| 8 | Steg |
| 9 | Durchgang |
| 10 | Traverse (obere) |
| 11 | Traverse (untere) |
| 12 | Trennsteg |
| 13 | Rahmensteg (ungeteilt) |
| 14 | Rahmensteg (geteilt) |
| 15 | Schmalseite |
| 16 | Breitseite |
| 17 | Rille |
| 18 | Befestigungskanal |
| 19 | Rippe |
| 20 | Ausnehmung |
| 21 | Vorsprung |
| 22 | Einbuchtung |
| 23 | Auflageprofil |
| 24 | Ausschnitt |
| 25 | Nut |
| 26 | Gewindebohrung |
| 27 | Schraube |

**Patentansprüche**

1. Energieführungskette (1) zum Führen von Energieleitern (2), insbesondere Kabeln oder Schläuchen, von einem festen Anschluß (3) zu einem ortsveränderlichen Verbraucher (4) mit Durchgänge (9) für die Energieleiter (2) bildenden, teilbaren Stegen (8), die aus wenigstens zwei Traversen (10, 11) mit abgeflachtem Querschnitt und abgerundeten Schmalseiten (15) sowie zwischen diesen im Abstand voneinander angeordneten Trennstegen (12) bestehen, die am oberen und unteren Ende mit Hinterschneidungen versehene, angeschnittene Ausnehmungen (20) aufweisen, wobei die Traversen (10, 11) nach dem Einlegen in die Ausnehmungen (20) durch Verdrehen um ihre Längsachse kraft- und formschlüssig mit den Trennstegen (12) verspannbar sind, dadurch gekennzeichnet, daß die Traversen (10, 11) an der nach innen gerichteten Breitseite (16) einen im Querschnitt C-förmigen und nach der Innenseite hin offenen Befestigungskanal (18) zum Einsetzen eines ungeteilten Rahmensteges (13) mit I-förmigem oder eines geteilten Rahmensteges (14) mit T-förmigem Querschnitt und in der Mittelachse ihrer Befestigungskanäle (18) eine Rippe (19) aufweisen.

2. Energieführungskette nach Anspruch 1, dadurch gekennzeicnet, daß die Traversen (10, 11) an ihren Schmalseiten (15) mit einer Rille (17) und die Trennstege (12) an einem Schenkel ihrer Ausnehmung (20) mit einem entsprechenden Vorsprung (21) ausgebildet sind.

3. Energieführungskette nach den Ansprüchen 1 und 2, dadurch gekennzeichnet, daß die Elastizität des mit dem Vorsprung (21) versehenen Schenkels der Ausnehmung (20) durch eine Einbuchtung (22) vergrößert ist.

4. Energieführungskette nach den Ansprüchen 1 bis 3, dadurch gekennzeichnet, daß die Trennstege (12) im Bereich des Bodens ihrer Ausnehmungen (20) mit Ausschnitten (24) für die Aufnahme von in die Befestigungskanäle (18) einsetzbaren Auflageprofilen (23) mit T- oder I-förmigem Querschnitt versehen sind.

5. Energieführungskette nach den Ansprüchen 1 bis 4, dadurch gekennzeichnet, daß die Rippen (19) der Traversen (10, 11) in entsprechende Nuten (25) an den Rahmenstegen (13, 14) und Auflageprofilen (23) eingreifen.

6. Energieführungskette nach den Ansprüchen 1 bis 4, dadurch gekennzeichnet, daß die Traversen (10, 11) an ihren Stirnseiten zwischen den Schmalseiten (15) und den Befestigungskanälen (18) mit Gewindebohrungen (26) für die Verbindung mit Laschen (6) einer Gelenkkette (5) versehen sind.

**Claims**

1. An energy guide chain (1) for guiding energy conductors (2), more particularly cables or hoses, from a fixed connection (3) to a mobile load or user (4) comprising divisible webs (8) which form passages (9) for the energy conductors (2) and which consist of at least two cross-members (10, 11) having a flattened cross-section and rounded narrow sides (15) and separating webs (12) which are disposed between them in spaced relationship and which have notched recesses (20) provided with undercuts at the top and bottom ends, the cross-members (10, 11) being adapted to be clamped to the separating webs (12) non-positively and positively, after insertion in the recesses (20), by being turned about their longitudinal axis, characterised in that the cross-members (10, 11) have, at the inwardly extending wide side (16), a fixing duct (18) of C-shaped cross-section, which open towards the inside, for the insertion of an undivided frame web (13) of I-shaped cross-section or a divided frame web (14) of T-shaped cross-section, and have a rib (19) on the centre-line of their fixing ducts (18).

2. An energy guide chain according to claim 1, characterised in that the cross-members (10, 11) have a groove (17) formed on their narrow sides (15) and the separating webs (12) have a corresponding projection (21) formed on one limb of their recess (20).

3. An energy guide chain according to claims 1 and 2, characterised in that the elasticity of the limb of the recess (20) formed with the projection (21) is increased by an indentation (22).

4. An energy guide chain according to claims 1 to 2, characterised in that the separating webs (12) are provided with cut-outs (24) in the region of the base of their recesses (20), to receive support sections (23) of T-shaped or I-shaped cross-section which are adapted to be inserted into the fixing ducts (18).

5. An energy guide chain according to claims 1 to 4, characterised in that the ribs (19) of the cross-members (10, 11) engage in corresponding grooves (25) on the frame webs (13, 14) and support sections (23).

6. An energy guide chain according to claims 1 to 4, characterised in that the cross-members (10,11) are provided with screwthreaded bores (26) at their end faces between the narrow sides (15) and the fixing ducts (18), for connection to links (6) of an articulated chain (5).

**Revendications**

1. Chaîne de transport d'énergie (1) pour le guidage de conducteurs d'énergie (2), notamment de câbles ou de tuyaux souples, depuis un raccord fixe (3) vers un utilisateur (4) changeant de lieu, comportant des barrettes divisibles (8) formant des passages (9) pour les conducteurs d'énergie (2), ces barrettes étant constituées d'au moins deux traverses (10, 11) à section aplatie et côté étroits arrondis (15) ainsi que d'entretoises de séparation (12) disposées à distance l'une de l'autre entre les traverses, les entretoises présentant à leur extrémité supérieure et à leur extrémité inférieure des évidement (20) découpés avec des parties en dépouille, les traverses (10, 11) pouvant, après introduction dans les évidements (20), être serrées par rotation autour de leur axe longitudinal, en liaison par force et par forme avec les entretoises de séparation (12), caractérisée en ce que les traverses (10, 11) présentent sur leur côté large (16) dirigé vers l'intérieur un canal de fixation (18) en forme de C en section transversale et ouvert en direction de l'intérieur pour l'introduction d'une barrette à cadre non divisée (13) à section transversale en forme de I ou d'une barrette à cadre divisée (14) à section en forme de T, ces traverses présentant une nervure (19) dans l'axe de leurs canaux de fixation (18).

2) Chaîne de transport d'énergie selon la revendication 1, caractérisée en ce que les traverses (10, 11) sont conformées sur leurs côtés étroits (15), avec une cannelure (17) et en ce que les entretoises de séparation (12) sont conformées avec une saillie correspondante (21) sur une branche limitant leur évidement (20).

3) Chaîne de transport d'énergie selon les revendications 1 et 2, caractérisée en ce que l'élasticité de la branche de l'évidement (20) munie de la saillie (21) est accrue par une entaille (22).

4) Chaîne de transport d'énergie selon les revendications 1 à 3, caractérisée en ce que les entretoises de séparation (12) sont, dans la zone du fond de leurs évidements (20), munies d'encoches (24) pour recevoir des profilés d'appui (23) à section transversale en forme de T ou de I pouvant être introduits dans les canaux de fixation (18).

5) Chaîne de transport d'énergie selon les revendications 1 à 4, caractérisée en ce que les nervures (19) des traverses (10, 11) s'engagent dans des rainures correspondantes (25) des barrettes à cadre (13, 14) et des profilés d'appui (23).

6) Chaîne de transport d'énergie selon les revendications 1 à 4, caractérisée en ce que les traverses (10, 11) sont munies sur leurs faces frontales, entre les côtés étroits (15) et les canaux de fixation (18), de perçages taraudés (26) pour l'assemblage avec les maillons (6) d'une chaîne articulée (5).

# Fig.1

# Fig.2

Fig. 3

Fig. 4

## Fig. 5

## Fig. 6

## Fig. 7